# EUROPEAN PATENT SPECIFICATION

(11) **EP 2 290 247 B1**
(45) Date of publication and mention of the grant of the patent: **07.10.2015**
(21) Application number: 10172820.2
(22) Date of filing: 13.08.2010
(51) Int. Cl.: F16B 47/00

(54) **Suction cup**
Saugnapf
Ventouse

(30) Priority: 28.08.2009 TW 098129057
(43) Date of publication of application: 02.03.2011
(73) Proprietor: Free- Free Industrial Corp., Taipei City (TW)
(72) Inventor: Liu, Sheng-Yu, Taipei City (TW)
(74) Representative: Puschmann Borchert Bardehle Patentanwälte Partnerschaft mbB

(56) References cited:
- EP-A2- 1 895 174
- EP-A2- 1 895 175
- US-A1- 2008 230 662

## Description

The invention relates to a suction cup suitable for hanging an object on a wall.

A conventional suction cup includes an elastic cup body and a hook coupled to the cup body for hanging an object. In use, the cup body is pressed against a wall surface so that air between the cup body and the wall surface is expelled. Thereafter, when application of pressure on the cup body is ceased, the cup body tends to restore to its original shape, and a low-pressure space is formed between the cup body and the wall surface. The pressure difference between inner and outer sides of the cup body keeps the suction cup adhered to the wall surface.

However, if the elastic cup body lacks sufficient stiffness, adherence to the wall surface is weakened because the tendency of the cup body to restore to its original shape for forming the low-pressure space is weak. On the other hand, if the elastic cup body is too stiff, a good sealing effect for the low-pressure space is unlikely to be formed between the cup body and the wall surface. In both cases, adherence of the suction cup to the wall surface might not be strong enough to permit hanging of an object for log periods of time.

Another conventional suction cup includes an elastic inner cup disposed in a rigid outer cup. The outer cup is provided with a hook for hanging an object. A bolt extends threadedly into the outer cup and is coupled to the inner cup.

In use, the inner cup is placed intimately against a wall surface with a rim of the inner cup clamped tightly between the outer cup and the wall surface. The bolt is then operated to move the inner cup such that a low-pressure space is formed between the inner cup and the wall surface. Because the rim of the inner cup is clamped tightly between the outer cup and the wall surface, leakage of air into the low-pressure space may be avoided, thereby permitting hanging of an object for long periods of time. However, the need to operate the bolt when adhering such suction device on the wall surface arises in user inconvenience.

EP 1895174 A2 discloses a suction cup including: a suction cup body having at least one surface having a gel, the surface being a suction surface; and an elastically deformable spring element provided in or on the suction cup body, having a concave shape so as to make the suction surface have a concave shape, and energizing a central part of the suction surface away from a surface to be sucked in the condition where the suction surface is in suction contact with the surface to be sucked, wherein the spring element is formed from a material having a modulus of elasticity higher than those of natural rubber and synthetic rubbers.

EP 1 895 175 A2 discloses a suction cup including a suction cup body formed from an elastic material and having a surface on one side in the thickness direction thereof as a concave suction surface; and a spring element provided as a part of the suction cup body, having a concave shape along the suction surface, and capable of elastic deformation such as to energize a central part of the suction surface away from a surface to be sucked in the condition where the suction surface is in suction contact with the surface to be sucked.

US 2008/230662 A1 discloses a suction cup, including a suction cup body formed from gel and having at least one flat or convex face serving as a suction face; a shape retaining member provided on the suction cup body and having elasticity for restoring, when the suction cup body is deformed, the suction cup body so as to restore an original shape; and a center stem connected to the suction cup body and projecting from a portion of the suction cup body positioned remotely from a location of the suction cup body at which the suction face is provided in a direction intersecting with the center of the suction face.

Therefore, the object of the present invention is to provide a suction cup that has improved adherence characteristics and that is easy to use.

According to the present invention, a suction cup includes the features of claim 1. A preferred embodiment of the invention is characterized in claim 2.

Other features and advantages of the present invention will become apparent in the following detailed description of the preferred embodiment with reference to the accompanying drawings, of which:
Figure 1 is a perspective view of the preferred embodiment of a suction cup according to the present invention;
Figure 2 is a sectional view of the preferred embodiment; and
Figure 3 is a sectional view to illustrate the preferred embodiment in a state of use.

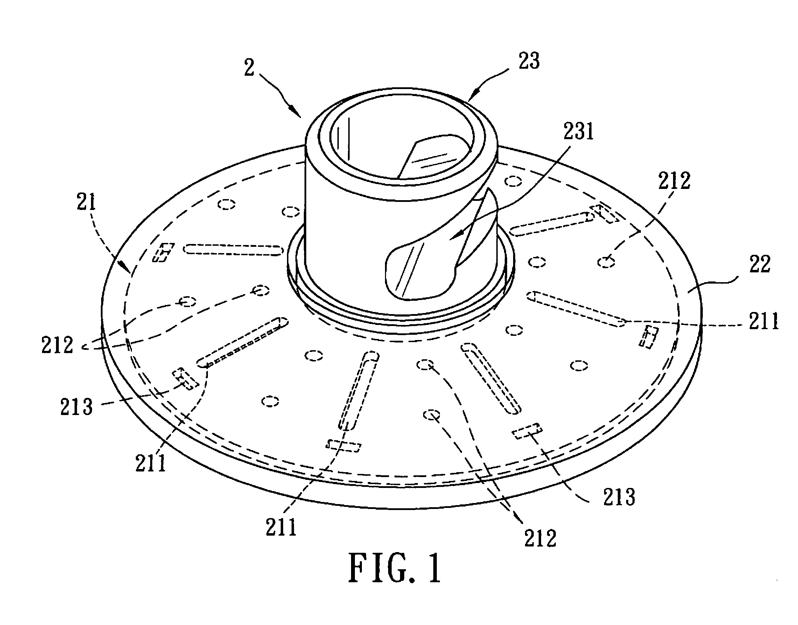

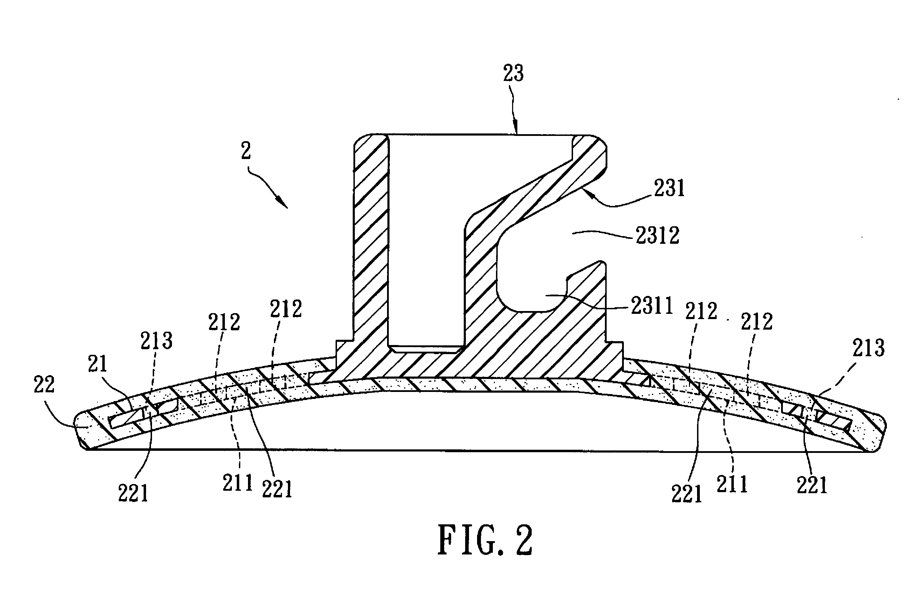

Referring to Figures 1 and 2, the preferred embodiment of a suction cup according to the present invention is shown to include a cup body 2 having a flattenable curved disc portion 21 made of a first elastic material, and an elastic cup portion 22 made of a second elastic material and having the disc portion 21 embedded therein. The first elastic material is stiffer than the second elastic material. Preferably, the first elastic material is a first plastic material that includes acrylonitrile-butadiene-styrene (ABS) resin, polyethylene (PE), polypropylene (PP), polystyrene (PS), or polyethylene terephthalate (PET), and the second elastic material is a second plastic material that includes rubber, silicone rubber, or polyethylene/polyvinyl chloride. However, as long as the first elastic material is stiffer than the second elastic material, other elastic materials may be used in accordance with a manufacturer's preference.

In this embodiment, the disc portion 21 is formed with a plurality of through-holes 211, 212 and 213, and the cup portion 22 is formed with a plurality of rib parts 221 that fill the through-holes 211, 212 and 213, respectively. The through-holes 211 are formed as elongate slots that radiate from a central part of the disc portion 21 toward a rim part of the disc portion 21. The through-holes 212 are circular holes arranged in pairs between adjacent ones of the through-holes 211. Each of the through-holes 213 is rectangular and is formed in the rim part of the disc portion 21 adjacent to a distal end of a corresponding one of the through-holes 211. By virtue of the rib parts 221 that fill the through-holes 211, 212, 213, the disc portion 21 and the elastic cup portion 22 may be firmly coupled to each other.

According to this embodiment, the suction cup includes a hanger portion 23 connected integrally to a convex side of the disc portion 21 and extending through the cup portion 22. The hanger portion 23 is in a form of a post and has an outer post surface formed with a hanger groove 231. Preferably, the hanger groove 231 has an inner retaining section 2311 and an outer access section 2312 that extends from the outer post surface to the inner retaining section 2311. The inner retaining section 2311 is for hanging an object and the outer access section 2312 is for guiding the object into or out of the inner retaining section 2311. In this embodiment, the outer access section 2312 is defined by an upwardly inclining guide face that is capable of guiding movement of the object into the inner retaining section 2311 and that is capable of hindering unintentional removal of the object from the hanger groove 231.

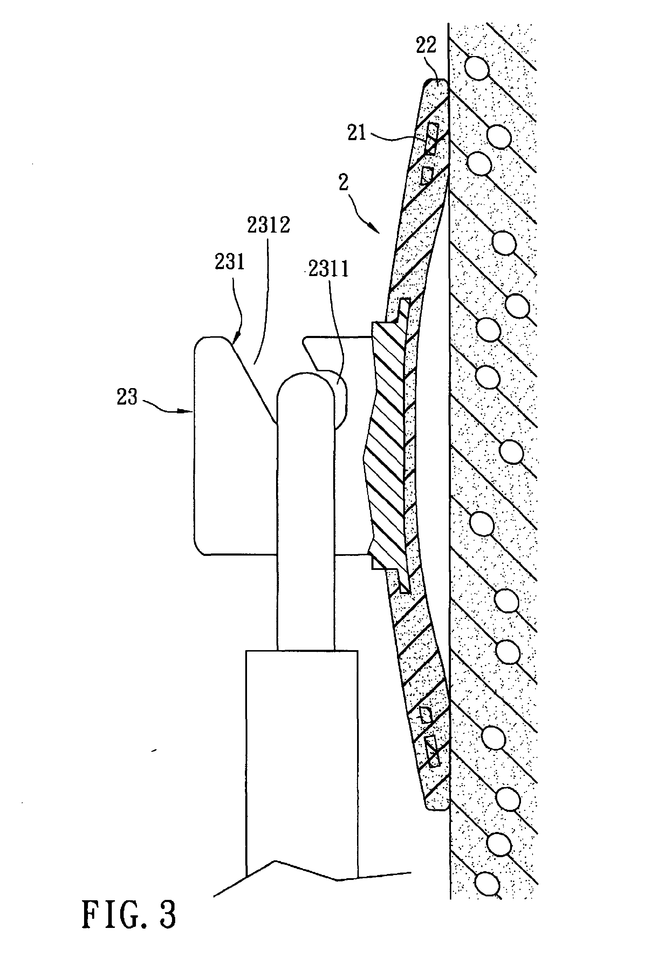

As shown in Figure 3, the user may hold the hanger portion 23 using one hand so as to press a concave side of the elastic cup portion 22 toward a wall surface, thereby flattening the disc portion 21. Thereafter, when the pressure applied to the suction cup is released, the disc portion 21 tends to restore to its original shape, thereby moving the cup portion 22 such that a low-pressure space is formed between the concave side of the cup portion 22 and the wall surface. The pressure difference between the opposite sides of the cup portion 22 keeps the suction cup adhered to the wall surface. It is noted that the suction cup should be adhered to the wall surface in a manner that the outer access section 2312 of the hanger groove 231 opens upwardly. An object may be hung on the hanger portion 23 once the suction cup has been adhered to the wall surface.

To sum up, in the suction cup of this invention, the cup body 2 includes a curved disc portion 21 embedded in an elastic cup portion 22 and made of an elastic material stiffer than that of the cup portion 22. Through the use of elastic materials having different stiffness for the disc portion 21 and the cup portion 22, the suction cup may ensure formation of a low-pressure space with a wall surface and may establish a good sealing effect for the low-pressure space between the rim part of the cup portion 22 and the wall surface. Accordingly, an object may be hung on the wall surface for a long time period using the suction cup of this invention. Moreover, the suction cup is convenient to use because it permits adhering on the wall surface using only one hand.

## Claims

1. A suction cup including a cup body (2), wherein the cup body (2) includes a flattenable curved disc portion (21) made of a first elastic material, and an elastic cup portion (22) made of a second elastic material and having the disc portion (21) embedded therein, the first elastic material being stiffer than the second elastic material, and wherein
the cup body (2) further including a hanger portion (23) connected integrally to the disc portion (21) and extending through the cup portion (22);
**characterized in that**
the hanger portion (23) is in a form of a post and has an outer post surface formed with a hanger groove (231); that
the hanger groove (231) has an inner retaining section (2311) and an outer access section (2312) that extends from the outer post surface to the inner retaining section (2311); and that. the disc portion (21) is formed with a plurality of through-holes (211, 212, 213), and the cup portion (22) is formed with a plurality of rib parts (221) that fill said through-holes (211, 212, 213), respectively.

2. The suction cup as claimed in claim 1, further **characterized in that** the first elastic material is a first plastic material that includes acrylonitrile-butadiene-styrene resin, polyethylene, polypropylene, polystyrene or polyethylene terephthalate, and the second elastic material is a second plastic material that includes rubber, silicone rubber, or polyethylene/polyvinyl chloride.

## Patentansprüche

1. Saugnapf umfassend einen Napfkörper (2), worin der Napfkörper (2) einen abflachbaren, kurvenförmigen Scheibenabschnitt (21), der aus einem ersten elastischen Material hergestellt ist, und einen elastischen Napfabschnitt (22) umfasst, der aus einem zweiten elastischen Material hergestellt ist, und der in dem Scheibenabschnitt (21) eingebettet ist, wobei das erste elastische Material steifer ist als das zweite elastische Material, und worin der Napfkörper (2) ferner einen Hängerabschnitt (23) umfasst, der einstückig mit dem Scheibenabschnitt (21) verbunden ist und sich durch den Napfabschnitt (22) erstreckt;
**dadurch gekennzeichnet,**
**dass** der Hängerabschnitt (23) in Form eines Zapfens ausgebildet ist und eine äußere Zapfenoberfläche hat, die mit einer Hängernut (231) ausgebildet ist; dass die Hängernut (231) einen inneren Halteabschnitt (2311) und einen äußeren Zugangsabschnitt (2312) hat, der sich von der äußeren Zapfenoberfläche zu dem inneren Halteabschnitt (2311) erstreckt, und dass
der Scheibenabschnitt (21) mit einer Vielzahl von Durchgangslöchern (211, 212, 213) ausgebildet ist, und dass der Napfabschnitt (22) mit einer Vielzahl von Rippenteilen (221) ausgebildet ist, die die Durchgangsöffnungen (211, 212, 213) respektive ausfüllen.

2. Saugnapf nach Anspruch 1, ferner **dadurch gekennzeichnet, dass** das erste elastische Material ein erstes plastisches Material ist, welches Acrylnitrin-Butadien-Styrol-Harz, Polyethylen, Polypropylen, Polystyrol oder Polyethylen-Terephtalat umfasst, und dass das zweite elastische Material ein zweites elastisches Material ist, das Kautschuk, Silikonkautschuk oder Polyethylen/Polyvinyl-Chlorid umfasst.

## Revendications

1. Ventouse comprenant un corps de ventouse (2), où le corps de ventouse (2) comprend une portion de disque courbe pouvant être aplatie (21) faite d'un premier matériau élastique, et une portion de coupe élastique (22) faite d'un second matériau élastique et ayant la portion de disque (21) y incorporée, le premier matériau élastique étant plus rigide que le second matériau élastique, et où le corps de ventouse (2) incluant de plus une partie de crochet (23) connecté intégralement à la portion de disque (21) et s'étendant par la portion de coupe (22); **caractérisée en ce que**
- la portion de crochet (23) est dans une forme d'un support et présente une surface extérieure formée avec un dégagement de suspension (231); que
- le dégagement de suspension (231) présente une section de retenue intérieure (2311) et une section d'accès extérieure (2312) qui s'étend d'une surface de support extérieure à la section de retenue intérieure (2311); et que, la portion de disque (21) est formée avec une pluralité de trous-percés (211, 212, 213), et la portion de coupe (22) est formé avec une pluralité de parties nervurées (221) qui remplissent respectivement lesdits trous-percés (211, 212,213).

2. Ventouse selon la revendication 1, **caractérisée de plus en ce que** le premier matériau élastique est un premier matériau plastique qui comprend la résine acrylonitrile-butadiène-styrène, le polyéthylène, le polypropylène, le polystyrène ou le polyéthylène téréphtalate, et le second matériau élastique est un second matériau plastique qui comprend le caoutchouc, le caoutchouc de silicone, ou le chlorure de polyéthylène/polyvinyle.
